# EUROPEAN PATENT APPLICATION

(11) **EP 3 187 739 A1**
(43) Date of publication of application: **05.07.2017**
(21) Application number: 16177602.6
(22) Date of filing: 01.07.2016
(51) Int. Cl.: F16B 45/04

(54) **HOOK STRUCTURE WITH SELF-LOCKING FUNCTION**

(30) Priority: 31.12.2015 CN 201521135689 U
(71) Applicant: JiangSu Zhongheng Pet Articles Joint-Stock Co., Ltd., Yancheng City, Jiangsu 224055 (CN)
(72) Inventor: Qiu, Bin, Yancheng City, Jiangsu 224055 (CN)
(74) Representative: 2K Patentanwälte Blasberg Kewitz & Reichel

(57) **Abstract**

The patent application discloses a hook structure with a self-locking function. The hook structure comprises a main body of the hook (1), a mobile type push pin (2), a shaft sleeve (3) and an elastic resetting piece (4), wherein the main body of the hook (1) comprises a connecting shaft (5), an opening type hook (6) and a closed type hook (7); the connecting shaft (5) is opened with an axial through hole, the connecting shaft (5) and the opening type hook (6) are opened with penetration slots (8) laterally, the mobile type push pin (2) comprises a pin body (9) and a handle (10), wherein the pin body (9) is installed in the through hole, the handle (10) is located at one side of the pin body (9) and passes through the penetration slot (8); the shaft sleeve (3) can be rotatably installed outside the connecting shaft (5), the top end of the shaft sleeve (3) is opened with at least one guide slot (11), the mobile type push pin (2) can move along the guide slot (11) and the penetration slot (8) up and down when the guide slot (11) rotates below the penetration slot (8), the mobile type push pin (2) is locked, wherein when the guide slot (11) rotates to the other positions; the elastic resetting piece (4) is located at the bottom of the through hole of the connecting shaft (5), and the elastic resetting piece (4) contacts with the bottom of the mobile type push pin (2).

## Description

### Technical Field

The patent application relates to the field of a connecting piece, and more particular, to a hook structure with a self-locking function.

### Background Art

A hook is an object, which is bent for taking and suspending implements. Hooks in can be divided into several classes including fish hooks, hang hooks and belt hooks, etc. The existing hooks have the deficits that they are easy to fall off when used and have no locking function.

### Summary of the Utility Model

In order to solve the foregoing problems, the utility model aims at providing a hook structure with a self-locking function in response to the shortages in the prior art.

The technical problems to be solved in the utility model can be realized by providing the following structure:
A hook structure with a self-locking function that includes a main body of the hook, a mobile type push pin, a shaft sleeve and an elastic resetting piece;
the main body of the hook comprises a connecting shaft, an opening type hook and a closed type hook, wherein the opening type hook is located at one end of the connecting shaft, and the closed type hook is located at the other end of the connecting shaft;
the connecting shaft is opened with an axial through hole, the connecting shaft and the opening type hook are opened with penetration slots laterally, the mobile type push pin comprises a pin body and a handle, the pin body is installed in the through hole, the handle located at one side of the pin body passes through the penetration slot;
the shaft sleeve can be rotatably installed on the outside of the connecting shaft, the top end of the shaft sleeve is opened with at least one guide slot, the mobile type push pin can move along the guide slot and the penetration slot up and down when the guide slot rotates below the penetration slot, the mobile type push pin is locked when the guide slot rotates to the other positions; and
the elastic resetting piece is located at the bottom of the through hole of the connecting shaft, and the elastic resetting piece contacts with the bottom of the mobile type push pin.

Further, the elastic resetting piece is a V-shaped resetting piece, wherein two ends of the V-shaped resetting piece are connected with spherical bumps, and the spherical bumps are located in holes opened on the side wall of the bottom of the connecting shaft.

Further, the elastic resetting piece comprises a spring and a steel ball, wherein one end of the spring is connected with the steel ball, and the steel ball is located in the hole opened on the side wall of the bottom of the connecting shaft.

Compared with the prior art, the utility model has the beneficial effects as follows:
the structure is simple, the design is smart, and it is difficult to fall off and has the lock function by adopting a brand new structure design.

### Brief Description of the Drawings

Fig. 1 is a schematic diagram of a hook structure with a self-locking function of the utility model.
Fig. 2 is a schematic diagram of a main body of the hook of the utility model.
Fig. 3 is a schematic diagram of a mobile type push pin of the utility model.
Fig. 4 is a schematic diagram of a shaft sleeve of the utility model.
Fig. 5 is a schematic diagram of the first embodiment of the utility model.
Fig. 6 is a schematic diagram of the second embodiment of the utility model.
Fig. 7 is a schematic diagram of a closed state of the hook of the utility model.
Fig. 8 is a schematic diagram of an opening state of the hook of the utility model.

Description for marks of drawings: main body of the hook 1, mobile type push pin 2, shaft sleeve 3, elastic resetting piece 4, connecting shaft 5, opening type hook 6, closed type hook 7, penetration slot 8, pin body 9, handle 10, guide slot 11

### Detailed Description of the Preferred Embodiments

In order to enable the technological means achieved by the utility model, creative features, reached object and effect to be prone to understand, the utility model is further illustrated hereinafter by reference to the detailed description of the preferred embodiments.

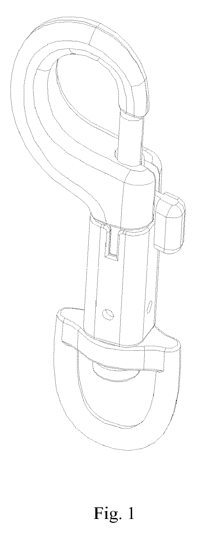

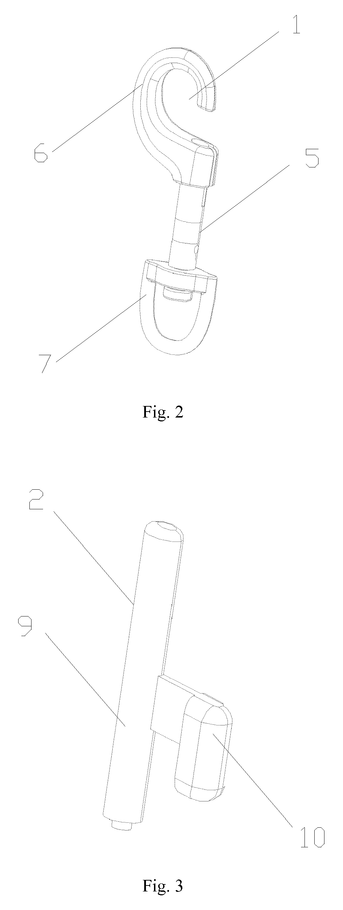

Referring to Fig. 1, Fig. 2, Fig. 3 and Fig. 4, a hook structure with a self-locking function described in the utility model includes a main body of the hook d1, a mobile type push pin 2, a shaft sleeve 3 and an elastic resetting piece 4.

The main body of the hook 1 includes a connecting shaft 5, an opening type hook 6 and a closed type hook 7, wherein the opening type hook 6 is located at one end of the connecting shaft 5, and the closed type hook 7 is located at the other end of the connecting shaft 5.

The connecting shaft 5 is opened with an axial through hole, the connecting shaft 5 and the opening type hook 6 are laterally opened with penetration slots 8, the mobile type push pin 2 includes a pin body 9 and a handle 10, the pin body 9 is installed in the through hole, the handle 10 located at one side of the pin body 9 passes through the penetration slot 8.

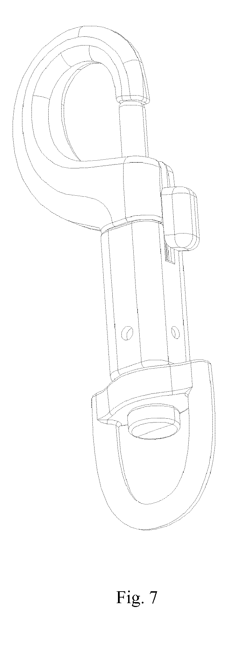

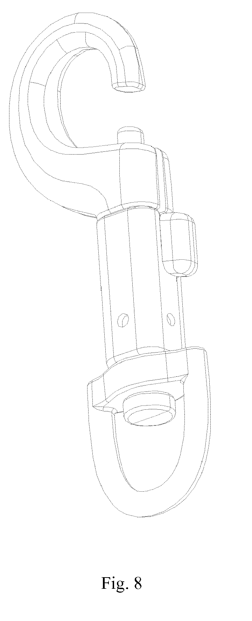

Referring to Fig. 7 and Fig. 8, the shaft sleeve 3 can be rotatably installed outside the connecting shaft 5, the top end of the shaft sleeve 3 is opened with at least one guide slot 11, the mobile type push pin 2 can move along the guide slot 11 and the penetration slot 8 up and down when the guide slot 11 rotates below the penetration slot 8, and the mobile type push pin 2 is locked when the guide slot 11 rotates to the other positions.

The elastic resetting piece 4 is located at the bottom of the through hole of the connecting shaft 5 and the elastic resetting piece 4 contacts with the bottom of the mobile type push pin 2.

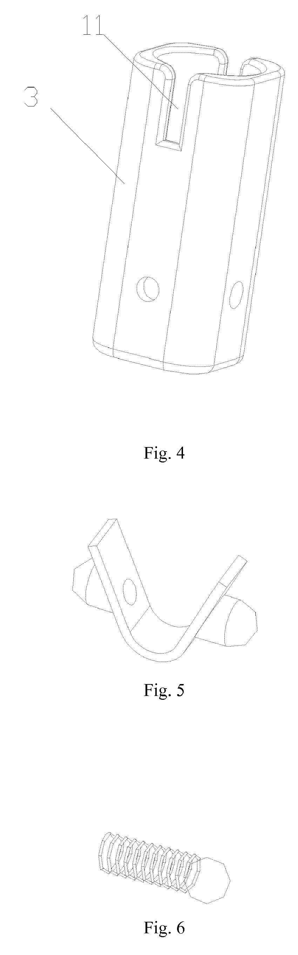

Figs. 5 and 7 contain a first embodiment of the present invention, wherein the elastic resetting piece 4 is a V-shaped resetting piece, two ends of the V-shaped resetting piece are connected with spherical bumps, and the spherical bumps are located in holes opened on the side wall of the bottom of the connecting shaft 5.

Figs. 6 and 8 contain a second embodiment of the present invention, wherein the elastic resetting piece 4 includes a spring and a steel ball, one end of the spring is connected with the steel ball, and the steel ball is located in the hole opened on the side wall of the bottom of the connecting shaft 5.

The above shows and describes the basic principles and main features of the utility model as well as the advantages of the utility model. Those skilled in the art should understand the utility model is not limited by the above-mentioned embodiments. The description of the above-mentioned embodiments and the specification is only to note the principle of the utility model. The utility model will also have various changes and improvements without departing from the premise of the spirit and the scope of the utility model. These changes and improvements all pertain to the scope of the utility model as required for protection. The scope of protection as required in the utility model is determined by the attached claims and the equivalents thereof.

## Claims

1. A hook structure with a self-locking function comprising a main body of the hook, a mobile type push pin, a shaft sleeve and an elastic resetting piece and, wherein:
the main body of the hook comprises a connecting shaft, an opening type hook and a closed type hook, wherein the opening type hook is located at one end of the connecting shaft, and the closed type hook is located at the other end of the connecting shaft;
the connecting shaft is opened with an axial through hole, the connecting shaft and the opening type hook are laterally opened with penetration slots, the mobile type push pin comprises a pin body and a handle, the pin body is installed in the through hole, the handle located at one side of the pin body passes through the penetration slot;
the shaft sleeve can be rotatably installed outside the connecting shaft, the top end of the shaft sleeve is opened with at least one guide slot, the mobile type push pin can move along the guide slot and the penetration slot up and down when the guide slot rotates below the penetration slot, the mobile type push pin is locked when the guide slot rotates to the other positions; and
the elastic resetting piece is located at the bottom of the through hole of the connecting shaft, and the elastic resetting piece contacts with the bottom of the mobile type push pin.

2. The hook structure with the self-locking function according to claim 1, wherein the elastic resetting piece is a V-shaped resetting piece, two ends of the V-shaped resetting piece are connected with spherical bumps, and the spherical bumps are located in holes opened on the side wall of the bottom of the connecting shaft.

3. The hook structure with the self-locking function according to claim 1, wherein the elastic resetting piece comprises a spring and a steel ball, one end of the spring is connected with the steel ball, and the steel ball is located in the hole opened on the side wall of the bottom of the connecting shaft.
